# EUROPEAN PATENT SPECIFICATION

(11) **EP 0 965 232 B1**
(45) Date of publication and mention of the grant of the patent: **14.02.2007**
(21) Application number: 98955872.1
(22) Date of filing: 07.12.1998
(51) Int. Cl.: H04N 9/77

(54) **APPARATUS AND METHOD FOR DYNAMICALLY CONTROLLING BRIGHTNESS OF OBJECTS ON A DISPLAY MONITOR**
VORRICHTUNG UND VERFAHREN ZUR DYNAMISCHEN KONTROLLE VON OBJEKTHELLIGKEIT AUF EINEM BILDSCHIRM
DISPOSITIF ET TECHNIQUE PERMETTANT D'AGIR DE MANIERE DYNAMIQUE SUR LA LUMINOSITE D'OBJETS DANS UN MONITEUR DE VISUALISATION

(30) Priority: 31.12.1997 US 2139
(43) Date of publication of application: 22.12.1999
(73) Proprietor: Koninklijke Philips Electronics N.V., 5621 BA Eindhoven (NL)
(72) Inventor: BAR-NAHUM, Guy, NL-5656 AA Eindhoven (NL)
(74) Representative: Gravendeel, Cornelis
(86) International application number: PCT/IB1998/001981
(87) International publication number: WO 1999/035854

(56) References cited:
- EP-A1- 0 627 849
- EP-A2- 0 773 676
- WO-A1-98/48571
- US-A- 5 345 278

## Description

### BACKGROUND OF THE INVENTION

### TECHNICAL FIELD

The present invention relates to display controllers in computer systems and information processing systems, more specifically to arrangements for controlling highlighting functions for graphic objects displayed on a display monitor in such a system.

### BACKGROUND ART

Personal computer monitors are currently used to simultaneously display complex images requiring high color quality, in combination with graphic and text objects requiring sharpness for lines and text. Specifically, personal computer display monitors are used to display text, lines and other vector primitives, as well as raster images and bitmap objects.

Cathode ray tube (CRT) technology in display monitors encounters a tradeoff between the size of the electron beam dot forming a pixel, and the quality of the colors produced during display of the pixel. Sharp details and high resolution are accomplished by generating a small dot on the screen. However, generation of a small dot on the screen reduces the color quality. Conversely, high color quality is achieved by generating a more intense beam in the CRT that creates a bigger dot. The larger dot, however, compromises the sharpness of the rendered object.

Conventional monitors are currently calibrated statically to compromise between sharpness for vector-based objects such as lines and text, and color quality important for raster images.

Hence, a monitor can only provide either high color quality with poor resolution by increasing the overall pixel size, or improved resolution at the expense of reduced color quality by minimizing the pixel size for maximum sharpness.

### SUMMARY OF THE INVENTION

There is a need for an arrangement in a computer system that enables a graphic object having image-based objects to be displayed with high color quality simultaneously with vector-based objects requiring high resolution and sharpness.

There is also a need for an arrangement that enables pixels on a display monitor to be dynamically controlled for optimum color quality for image-based objects and optimum resolution and sharpness for non-image-based objects such as vector-based objects.

There is also a need for an arrangement in a computer system for selectively controlling the color quality of graphic objects to maximize the color quality of image-based objects and the resolution of non-image-based objects using a generic architecture compatible with display monitors from different manufacturers.

There is also a need for an arrangement that enables a computer system to selectively improve color quality of selected image-based objects based on user preference selection criteria and user brightness adjustment settings.

These and other needs are attained by the present invention, where a display driver filter intercepts calls by an operating system graphics module requesting graphic operations on a graphic object in order to dim color intensity values of selected pixels requiring high resolution. The graphic object, including the dimmed pixels, is then displayed at an increased brightness to increase the color quality of the unselected pixels while maintaining the resolution of the selected (i.e., dimmed) pixels.

According to one aspect of the present invention, a method is provided for dynamically controlling brightness of objects on a display monitor, comprising: a first generating step for generating in an operating system graphics module a first call to a display driver filter across a display driver interface to perform a graphic operation for a graphic object having at least one of pictorial content and non-pictorial content; a dimming step for dimming pixels of the non-pictorial content in the display driver filter from a specified intensity to a reduced intensity; a second generating step for generating in the display driver filter a second call to a display driver, which is configured for controlling the display monitor, to perform the graphic operation for the graphic object including the dimmed pixels; and a displaying step for displaying on the display monitor the graphic object including the dimmed pixels at an increased brightness inverse to the reduced intensity in the dimmed pixels. Dimming the pixels of the non-image-based content in the display driver filter in combination with displaying at an increased brightness the graphic object having the dimmed pixels enables the image-based content of the graphic object to be displayed with maximum color quality, simultaneously with optimum resolution and sharpness for the non-image-based content of the graphic object. Moreover, the generation of the second call by the display driver filter for performing the graphic operation for the graphic object having the dimmed pixels provides a generic interface enabling any third party display driver to execute the original call by the operating system graphics module on the modified graphic object having the dimmed pixels. Generation of the second call to the display driver by the display driver filter also enables callbacks to be issued by the display driver to the operating system graphics module, without the necessity of repeated dimming of objects.

Another aspect of the present invention provides a computer system for displaying a graphic object, comprising a software-based operating system having a graphics module for creating a graphic object for a software application executable by the computer system, the graphics module configured for generating a first call requesting performance of a graphic operation for the graphic object, a display driver filter for dimming selected pixels from a specified intensity to a reduced intensity, and for generating a second call requesting performance of the graphic operation for a copy of the graphic object having the reduced color intensity values for the selected pixels, respectively; and a display monitor configured for displaying the copy of the graphic object at an increased brightness inverse to the reduced intensity of the selected pixels. The display driver filter generating the second call enables selected pixels to be optimized for resolution simultaneously with optimizing the color quality of other pixels in a displayed graphic object, with no modification to the software-based operating system architecture, enabling a generic interface to be maintained between the operating system graphics module and the display driver. Moreover, the display monitor can display high-resolution images simultaneously with high color quality images without substantial hardware modification, merely by providing the ability of switching between a normal-intensity mode and an increased brightness mode in the display monitor.

Additional objects, advantages and novel features of the invention will be set forth in part in the description which follows, and in part will become apparent to those skilled in the art upon examination of the following or may be learned by practice of the invention. The objects and advantages of the invention may be realized and attained by means of the instrumentalities and combinations particularly pointed out in the appended claims.

### BRIEF DESCRIPTION OF THE DRAWINGS

Reference is made to the attached drawings, wherein elements having the same reference numeral designations represent like elements throughout and wherein.
Figure 1 is a block diagram illustrating a conventional (prior art) computer display system.
Figure 2 is a block diagram illustrating a computer system for displaying a graphic object according to an embodiment of the present invention.
Figure 3 is a block diagram illustrating in detail the display driver filter of Figure 2 according to an embodiment of the present invention.
Figures 4A and 4B are flow diagrams illustrating a method for initializing the computer system of Figure 2, and a method for generating a graphic object in a computer system according to an embodiment of the present invention, respectively.

### BEST MODE FOR CARRYING OUT THE INVENTION

The invention relates to a method and system for processing an image. The image contains a picture component and a non-pictorial component. An example of a non-pictorial component is text. The inventors have recognized that the color quality of a picture component is crucial to the appearance, and that sharpness is secondary, and that for a non-pictorial component, sharpness is more important than color quality. The inventors propose to identify the pictorial component in the image for selectively increasing the light intensities in the area of the pictorial component with respect to the light intensities of the complement area. Identification is achieved through filtering according to the type of video data rendered, preferably in combination with discriminating on the basis of the size of the pictorial area. A description will first be given of a conventional computer system, followed by a description of the arrangement for selectively controlling brightness of displayed objects according to an embodiment of the present invention.

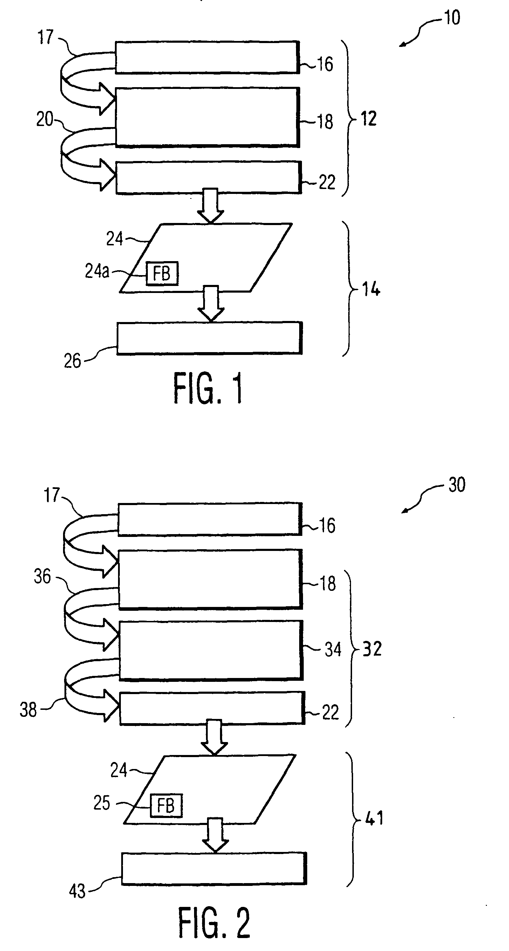

Figure 1 is a block diagram illustrating a conventional computer system for displaying a graphic object. The computer system 10 may be implemented, for example, as a Pentium-based personal computer having a Windows 95 or Windows NT-type operating system from Microsoft Corporation. The computer system 10 includes a software portion 12 and a hardware display portion 14. The software portion 12 includes an application layer 16 that executes an application that generates video content, for example buttons, windows, images, etc. The application layer 16 may execute, for example, a Windows-based word processor capable of importing graphics, a database application configured for storing text data and bitmapped images, or a web browser. The application layer 16 generates a function call 17 to an operating system in the computer system 10 to perform lower-level operating system services. Specifically, the operating system includes a graphics module 18, also referred to as a graphics engine, that performs the operating system services associated with graphics and operations and services, for example drawing lines, plotting text, and painting bitmap images on the display monitor. The graphics module 18 communicates via a generic display driver interface (DDI) call 20 with a third party display driver 22. Specifically, the graphics module 18 generates a function call 20 to the display driver 22 via the DDI interface 20. The display driver 22 translates the function call from the graphics module 18, also referred to as a graphics engine request, into a series of hardware-specific operations performed in the hardware portion 14.

The display driver 22 outputs data to the hardware portion 14 in the form of video data and control data executable by the hardware portion 14. As shown in Figure 1, the hardware portion 14 includes a graphics display adapter 24 configured for converting the video data into analog video (RGB) signals, and a display monitor 26 for displaying the graphic object in response to the analog video signals output by the graphics display adapter 24.

As recognized in the art, the OS graphic engine 18 generates requests via the DDI interface 20 for performing various graphic functions. The OS graphic engine requests can be categorized into the following areas: initialization, pre-rendering, rendering, as well as other kinds of requests such as various mode queries, etc. Examples of initialization requests include queries to the display driver 22 of hardware acceleration capabilities. Additional examples of initialization calls by the graphics engine 18 to the display driver 22 include creating context objects, optionally gaining access directly to the frame buffer (FB) 24a in the graphics display adapter 24, and mode changes and frame buffer format. Examples of pre-rendering calls specified by Windows NT include requests for caching objects (e.g., DrvRealizeBrush, DrvDitherColor, etc.). Examples of rendering-type calls include line, brush and textual requests (e.g., DrvTextOut, DrvStrokePath, DrvStrokePathAndFill, DrvBitBlt (with no source bitmap), DrvLineTo, etc.). Finally, examples of image-based requests include DrvBitBlt (with source bitmap), DrvCopyBits, and DrvStretchBits. These and additional examples of OS graphic engine calls specified by Windows NT are specified in detail in the attached Appendix A.

Hence, the graphics module 18 is generic to the display systems, and is typically written by the operating system provider to provide an open system for the display driver 20. However, the system of Figure 1 is not designed for distinguishing the relative intensity between image-based content and nonimage-based content. Hence, the monitor 26 has to be calibrated statically to comprise for sharpness between vector-based objects (e.g., lines and text) and color quality important for raster images.

According to the disclosed embodiment, image-based content is selectively enhanced (i.e., highlighted) relative to nonimage-based content in a graphic object by dimming pixels of the nonimage-based content from a specified intensity to a reduced intensity, and displaying on a display monitor the graphic object having the dimmed pixels at an increased brightness inverse to the reduced intensity of the dimmed pixels. The displaying of the graphic object at an increased brightness inverse to the reduced intensity in the dimmed pixel effectively returns the dimmed pixels to their original intended intensity values. The maintained (i.e., undimmed) pixels, however, are highlighted by the increased brightness of the display monitor to create a larger dot on the screen to achieve optimum color quality. Hence, the computer system can simultaneously display high quality color images and high-resolution nonimage-based content, such as vector-based objects.

Figure 2 is a block diagram of a computer system for selectively dimming selected pixels by reducing the corresponding color intensity values and displaying the graphic object at an increased brightness according to an embodiment of the present invention. The computer system 30 includes a software system 32 having an operating system that supports execution of the application 16, and a hardware portion 41, described below. The operating system includes the graphics module 18 for creating a graphic object for the software application 16. Specifically, the graphics module 18 initiates a DDI interface call 36 requesting the performing of a graphic operation for a graphic object. The software system 32 includes a display driver filter 34 configured for receiving DDI interface calls 36 from the OS graphics module 18. The display driver filter 34 appears to the graphics module 18 as a conventional third party display driver 22 configured for executing and performing the graphic operations called by the graphics module 18 for a graphic object. As such, the display driver filter 34 includes the entry points in Appendix A that may be called by the graphics module 18. Hence, the display driver filter 34 is loaded by the OS graphics module 18 in a manner similar to a conventional display driver 22, and will be called by the graphics engine 18 to perform various graphic operations, for example initialization, rendering, and mode change activities.

The display driver filter 34 is configured for dimming pixels in the graphic object, described in detail below, and generating a second call to a third party display driver 22 controlling the hardware portion 41. As described below, the display driver filter 34 generates the second call requesting performance of the graphic operation for a copy of the graphic object from the graphics engine 18, where the copy of the graphic object includes the reduced color intensity values for the selected pixels of the graphic object.

The display driver 22 controls the hardware 41 of the computer system. According to the disclosed embodiment, the display driver 22 controls the graphics display adapter 24 in a "Graphics Display Adapter Mode", which allows coloring of specific pixels. The Graphics Display Adapter Mode is a non-palletize mode. The graphics display adapter 24 includes a frame buffer 25, where color values can be written on a pixel-by-pixel basis in the Graphics Display Adapter Mode. Hence, a color may be attached to a specific geometric location on the display screen, such that the color dimming of a pixel will not have any global effect, and will be restricted to the modified pixel. According to the disclosed embodiment, each pixel in the frame buffer 25 stores 8-bit red (R), green (G) and blue (B) color intensity values, although alternate pixel color representations may be used. The graphics display adapter 24 also includes control logic (not shown) for selectively setting the monitor 43 to either a normal brightness mode or an increased brightness mode, also referred to as a dynamic brightness mode, where the monitor 43 increases the intensity of its electron beam output.

Hence, the display driver filter 34 intercepts the calls 36 initiated by the graphics engine 18 to perform a graphic operation for a graphic object having image-based content and nonimage-based content. The display driver filter 34 creates a copy of the graphic object, described below, and dims the pixels of the nonimage-based content and pixels of selected image-based content objects. For the image based content, however, the display driver filter 34 would not dim the pixels, and therefore would not correct the boost in the monitor 43. The display driver filter 34 then generates a second call 38 to the display driver 22 to perform the graphic operation specified in the first call 36 on the copy of the graphic object having the dimmed pixels.

Hence, the third party display driver 22 can execute the requested graphic operation on the copy of the graphic object including the dimmed pixels, and may perform callbacks directly to the graphic module 18 to complete operations on the copy of the graphic object having the dimmed pixels.

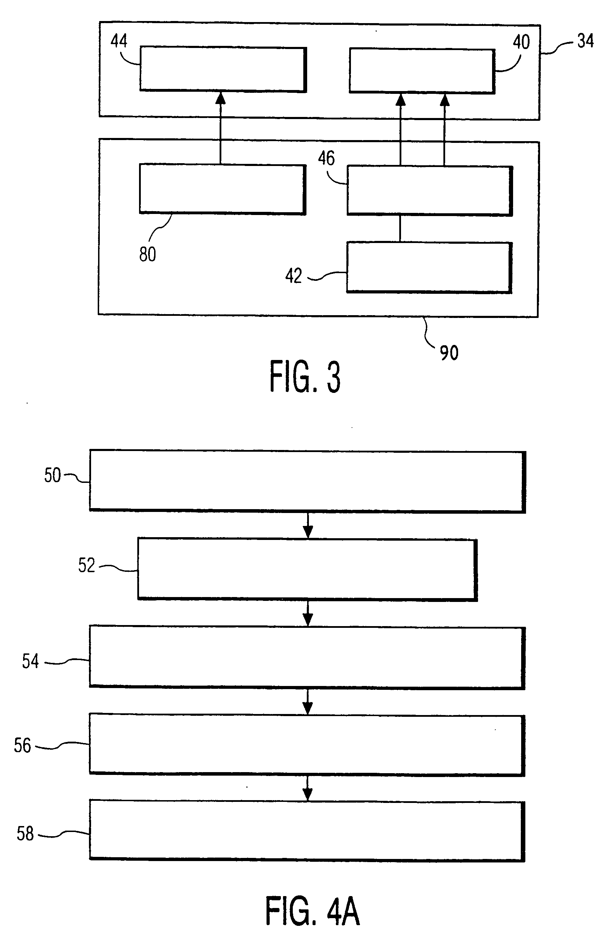

Figure 3 is a block diagram illustrating in detail the display driver filter 34 according to an embodiment of the present invention. As shown in Figure 3, the display driver filter 34 includes a color conversion module 40, implemented for example as a lookup table (LUT), for converting the color intensity values of the selected pixels of the graphic object to the reduced color intensity values, respectively. When the color conversion module 40 is implemented as a lookup table, the LUT stores the reduced color intensity value for dimmed pixels relative to respective original color intensity values. Alternatively, the color conversion module 40 can be implemented by converting a color to LHS representation, and then decreasing the luminance (L) component.

As described below, the display driver filter 34, upon identifying an original color intensity value in a pixel to be dimmed, accesses the lookup table 40 using the original color intensity value to obtain the corresponding stored reduced color intensity value for the dimmed pixel. The lookup table 40 includes three 8-bit x 256 memory locations for the respective red, green, and blue color intensity values. According to the disclosed embodiment, the reduction in color intensity is initially set to a default value of 50%, such that an original red color intensity value of "255" would be mapped onto a corresponding memory location in the lookup table 40 having a corresponding reduced red intensity default value of "128." The nature of the calibration values in the color conversion module 40 may vary for color conversion schemes other than the lookup table.

The color conversion values in the color conversion module 40 serve as an inverse correction to the boosting of intensity in the monitor 43. Hence, the color conversion values in the color conversion module are based on a display monitor boost profile 46 in system memory 90. The monitor boost profile 46 is established by the manufacturer of the monitor 43, and specifies calibration and gain parameters (i.e., the specific boost behavior) of the monitor 43. The display monitor boost profile 46 is typically loaded into system memory (e.g., a hard disk), during initial installation of the display driver software 22.

Since the gain parameters of the monitor 43 may change, for example due to hardware aging or manufacturing process deviations, the user of the computer system 30 can modify the dimming profile using a calibration tool, where the user changes are stored in system memory 90 as user brightness adjustment settings. Hence, the color conversion module stores conversion values based on the display monitor boost profile 46 and the user brightness adjustment settings.

The display driver filter 34 also includes an image selection profile 44 specifying selection criteria for selecting image-based objects in the graphic object. Specifically, it may be desirable that not all images are highlighted by the monitor 43. Hence selected image objects in a graphic object may be highlighted and dimmed by refining the definition of image-based content, such that only specific image-based objects are highlighted by the monitor 43. For example, small bitmap images such as icons, or bitmap images having small color variance such as bitmap buttons, would have little benefit to the user upon highlighting by the monitor 43. Hence, it is desirable to apply color augmentation (i.e., color highlighting) only to image-based content objects that would benefit the user's perception.

The exact conditions and policy for the selection of images that do not need increased brightness can be profiled by the set of rules that the user can customize to individual preferences. Those user preferences are stored in the selection profile 44, which during loading time are accessed by the filter 34 to locate the set of selection rules. In addition, the color augmentation may be preferred only for certain software applications 16, for example web browser applications, graphic designer applications, etc., where other applications such as spreadsheets, text-only applications, and vector-based objects requiring precision and high resolution would not be selected for highlighting.

As shown in Figure 3, system memory 90 includes a display monitor color profile 46. The display monitor color profile 46 specifies the color calibration of the display monitor, and compensates for any nonlinearities in the gain of the display monitor amplifiers. As described below, the display driver filter 34 generates the reduced color intensity values for the lookup table 40 based on the display monitor color profile settings in the display monitor color profile 46 and the user brightness adjustment settings 42.

Hence, the display driver filter 34 includes a selection profile 44 specifying selection criteria for selecting image-based objects in the graphic object. As described below, the display driver filter 34 reduces the color intensity values of the selected pixels for the selected image-based objects based on the selection criteria.

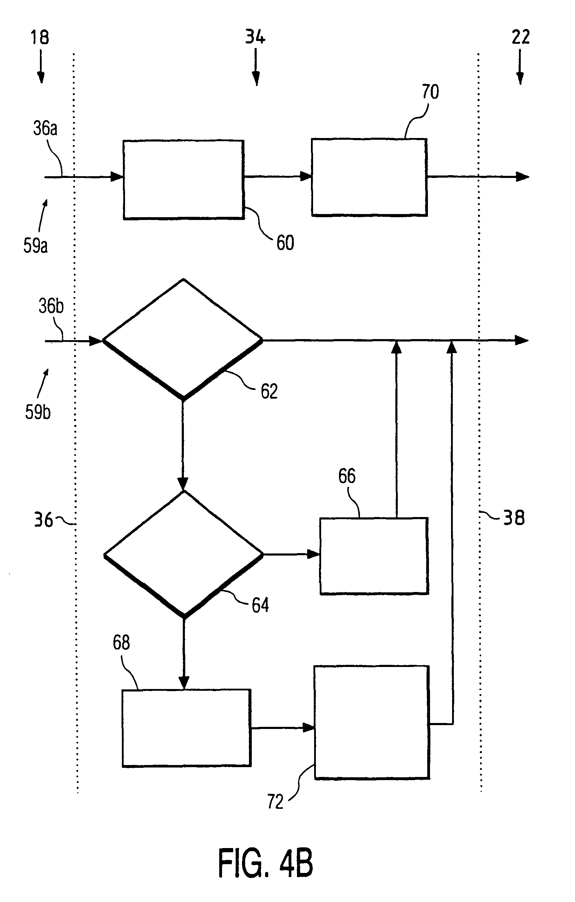

Figures 4A and 4B are flow diagrams illustrating the operation of the computer system of Figure 2. More specifically, 4A is a flow diagram illustrating the initialization phase of the display driver filter 34, and Figure 4B is a flow diagram illustrating the method for enhancing the color of certain image-based content objects according to an embodiment of the present invention. As shown in Figure 4A, the initialization phase begins in step 50, where the display driver filter 34 configures the operating system graphics module 18 to generate the function call 36 to the display driver filter 34. Specifically, the display driver filter 34 needs to initialize the graphic module 18 to generate a function call 36 to the display driver filter 34 for any rendering activity. Normally, the graphics module 18 can emulate various rendering primitives that can be used directly in the graphics adapter hardware 24 from the graphics engine 18. The display driver filter 34 eliminates the direct emulation function by the graphics engine 18 to ensure the display driver 34 receives function calls 34 for all graphic operations (e.g., rendering). Specifically, the display driver filter 34 declares itself as having improved rendering capabilities relative to the graphics module 18. Hence, the graphics engine 18, recognizing the display driver filter 34 as having better rendering capabilities, would pass the rendering function to the display driver filter 34. Note that it is not necessary for the display driver filter 34 to actually have better rendering capabilities, merely that the display driver filter 34 prevents the graphics module 18 from performing the rendering activity.

Alternatively, the display driver filter 34 may configure the operating system graphics module 18 to generate the call 36 for any rendering activity by declaring the display driver filter 34 to be a device-managed driver for controlling the display monitor 43. Specifically, the display driver filter 34 limits the access of the graphics engine 18 into the frame buffer 25 of the graphics display adapter 24 by declaring that the graphics display adapter 24 and the monitor 43 are managed by the display driver filter 34. Since every operating system has different mechanisms to negotiate the division of work between the graphics module 18 and the display driver associated with the monitor, the display driver filter 34 uses the negotiation mechanisms to ensure full interception of rendering requests 36 from the OS graphics engine 18. Hence, display driver filter 34 can effectively intercept the calls 36 generated by the operating system graphics module 18 for any graphic operations to be performed for a graphic object.

Following configuration of the graphics module 18 in step 50, the display driver filter 34 obtains the display monitor color profile 46 from the system memory 90 in step 52. The display driver filter 34 also queries the monitor 43 and the System Settings stored in system memory 90 to determine whether the monitor has dynamic brightness mode capabilities that generates pixels at an increased brightness relative to normal display settings. The monitor 43 operates according to a dynamic brightness mode, hence, the display driver filter 34 sends a request in step 54 to the monitor 43 to operate in dynamic brightness mode. The display monitor 43 in response initiates a global boost of the intensity of its electron beam output. Typically, the hardware 41 will acknowledge the mode change request generated by the filter 34.

The display driver filter 34 then generates and loads the modified color values into the color conversion module 40 in step 56 based on the stored color profile 46 and the user brightness adjustment settings 42 in step 56.

The display driver filter 34 in step 58 also stores user selection criteria in the selection profile 44. As described above, the selection profile will specify the executable applications 16 that will have color-enhanced images (e.g., web browser software), the minimum object size (e.g., minimum height and width of one inch), a maximum object size to avoid saturation of the display, and a minimum color variation. The minimum color variation may specify that certain colors are not to be enhanced, for example black, white, and colors that would not benefit from enhancement.

Following initialization of the graphics module 18 and the display driver filter 34, the display driver filter 34 is ready to begin modifying the calls from the OS graphics module 18.

Figure 4B is a flow diagram illustrating the operational phase of the display driver filter 34. The display driver filter 34 receives a function call 36 from the graphics module 18 in step 59 to perform a graphic operation for a graphic object having image-based content and nonimage-based content. Specifically, the graphics engine 18 may generate a plurality of individual calls to different entry points of the display driver filter 34 for respective objects (e.g., image-based objects or nonimage-based objects) to be displayed simultaneously within the graphic object, depending on the operation to be performed. As such, the term "graphic object" is defined as a collection of individual objects of different types (e.g., image-based or nonimage-based) that are simultaneously displayed on the display 43. Hence, the display driver filter 34 can identify nonbitmap objects representing nonimage-based content based on the entry point called by the graphics engine 18 as specified in Appendix A.

As shown in Figure 4B, the display driver filter 34 receives a first function call via a nonimage content DDI entry point 36a from the graphics module 18 for performing a graphic operation for nonimage content in step 59a. The display driver filter 34 also receives a second function call via an image content DDI entry point 36b from the graphics module 18 for performing a graphic operation for image content in step 59b.

The display driver filter 34 then identifies in step 60 the non-image pixels that need to be dimmed, and creates temporary objects by making a copy of the identified objects in step 60. Specifically, the display driver filter 34 identifies the pixels associated with a nonimage-based object based on the entry point 36a (e.g., DrvTextOut, DrvStrokePath) called by the graphics module 18. Hence, function calls by the graphic engine 18 for rendering nonbitmap objects such as realizing brushes, solid color or patterns, drawing lines, filling areas with color or pattern brush, text or nonimage transactions, are identified for dimming in step 60. The display driver filter 34 then makes a copy of the nonbitmap object referenced in the function call from the graphics module 18 in step 60. Hence, the display driver filter 34 identifies the nonbitmap objects for dimming and the respective pixels in step 60, and copies the identified nonbitmap objects for modification. The temporary objects are then dimmed by the color conversion module 50 in step 70.

The display driver filter 34 also identifies the image-based content objects for dimming in steps 62 and 64. Specifically, the display driver filter 34 determines in step 62 if an image is already marked as not needing any dimming. If the image is already marked, the marked image is passed to the display driver 22. If the image is not marked, the display driver filter 34 checks in step 64 if the image meets selection criteria for no dimming based on the image selection profile 44. If the image meets the selection criteria, the display driver 34 marks the source image as not needing dimming in step 66. However, if the display driver filter 34 determines the image does not meet the selection profile criteria, the display driver filter 34 copies in step 68 the identified image-based content object for modification. The copied objects are also referred to as temporary objects. The graphic module 18 usually maintains and manages objects that represent the various primitives that it expects the display driver 22 to support. Those objects are passed as arguments to the display driver filter 34 through the DDI calls 36. Only some such objects have color attributes embedded in them. For example, the Windows NT DDI manages surfaces, brushes, paths, and more objects for its calls. There are two basic types of color representation that are attributed to such graphics engine objects, namely the solid color and pattern. Solid colors specify a color with a predefined representation format (i.e., RGB color encoding of 24 bits in 8:8:8 format, etc.). When the filter 34 encounters a graphic engine object with this type of solid color attribute, the color conversion module 34 maps the requested color to the corresponding dimmed color in step 72, and the display driver filter 34 marks the destination image as not needing dimming. For example, color conversion module may dim the temporary source image by accessing a lookup table, and writing the modified solid color values obtained from the lookup table into the dimmed object. Patterns are small bitmaps that have a collection of colors that fill an area. The pattern can be converted by simply converting all of the pixels in the same way as a solid color that has been converted on a pixel by pixel basis, if necessary.

Once the temporary objects have been dimmed, the display driver filter 34 generates a function call in step 68 to the display driver 22 to request performance of the graphic operation specified by the graphics module 18 on the modified copies of the object. Use of temporary objects provides the advantages of dimming of an object only once. Specifically, the display driver 22 may issue a callback to the graphics engine 18 to perform additional operations in support of completing the requested operation specified in the second call 38. The graphics engine 18 may then respond to the callback query directly to the display driver 22, without the necessity of the display driver filter 34 performing another dimming operation. Modifying the original object would create a possible double dimming, when an already dimmed non-image content object would be re-rendered, and dimmed again by the filter. This would create an object that is too dark, and the boost in the monitor 43 would not be sufficient to restore the object to the normal brightness. For example, dimming an object by 50% that was already dimmed by would yield an object at 25% of its original intensity, such that the boost in the monitor 43 would only result in 50% intensity in the displayed object, and not 100% intensity. Hence, the use of temporary objects does not affect the original object, so the next graphic operation is performed on the original color intensity. Finally, changing the original object supplied by the graphics engine 18 may affect other users that share the same objects in multi-monitor environments. Hence, use of the copies of the object as temporary objects enables the highlighting feature to be performed without adversely modifying the original object when required by other applications. The temporary objects are eliminated after the display driver 22 finishes the rendering into the graphics display adapter 24.

In addition, some graphics module implementations, for example as found in Windows NT 4.0, allow the hardware to optimize frequent patterns by caching the frequent patterns into the video memory on the graphics adapter 24. Since those frequent patterns need to be dimmed, it is preferable to dim the frequent patterns in the caching process to eliminate the necessity of repeating the dimming operation on the same patterns. Hence, the call 38 to the display driver 22 may request the display driver 22 to cache the temporary dimmed pattern. After the caching operation is complete, the display driver filter 34 can delete the temporary pattern copy.

As described above, the display driver filter 34 dims the nonbitmap objects in step 60 to a reduced intensity that compensates for the increased brightness in the monitor 43 in step 70. Hence, the monitor 43 displays the graphic object including the dimmed pixels at an increased brightness inverse to the reduced intensity in the dimmed pixels, such that the luminosity (i.e., intensity) of the dimmed pixels on the display monitor 43 equals the color intensity generated by the original color intensity value on a normal intensity screen. Hence, all nonimage-based content that was manipulated by the display driver filter 34 eliminates the effect of the boosting of the electron beam output in the display monitor 43. Image or bitmap objects that are not modified by the display driver filter 34, however, for example from graphics module calls (e.g., DrvCopyBits, DrvStretchBits, or DrvBitBlt specified in Appendix A) are passed unchanged to the display driver 22, causing the color intensity to be boosted by the monitor. Hence, the color quality of the selected image-based content objects is enhanced by highlighting the associated pixels, without comprising the image sharpness in the nonimage-based content objects (e.g., the nonbitmap objects) displayed in the dimmed pixels. Hence, since the boost effect is limited only to unmodified pixel locations, the nonimage-based content would retain their original intensity and sharpness.

As described above, the exact conditions and policy for the selection of images that need not be boosted are profiled by the selection profile 44. If a bitmap image is identified in step 62 for dimming, the method for dimming a bitmap is identical to the pattern dimming. Specifically, a temporary copy of the bitmap is created to eliminate double dimming and sharing problems. The temporary bitmap is then dimmed on a pixel-by-pixel basis as described above with respect to steps 64 and 66. The display driver 22 is then requested to display the temporary dimmed bitmap on the screen. If an image is to be boosted, the filter 34 would mark its source surface as a surface that should not be dimmed. The marking of surfaces as not needed to be dimmed accelerates the selection and decision process, as well as eliminates double dimming and other selection problems.

The way a surface is marked as not needed to be dimmed depends upon the graphics engine surface implementation. If the graphics engine 18 supports a uniqueness counter for the object, similar to Windows NT 4.0, a high bit on the counter is preferred as a marking implementation since the uniqueness counter should be updated by the dimming action. An alternative implementation would use a context field to mark the surface or even a database with handles of the surfaces in the filter if they are unique.

The filter marks the images it handles for acceleration of the selection process, and to eliminate double dimming. In the selection process the image is first checked to determine if the image is already marked as not needing any dimming. Hence, the full selection process is performed only if the image is a non-marked image.

If the filter selects the image to be an image based content, the filter marks its source surface, (its Graphics engine representation) as no need to dim. If, on the other hand, the filter does not select the image to be an image based content, the filter dims its temporary copy, and marks the destination surface as already dim.

Hence, a copy from an already dimmed surface would not result in double dimming. Once an image is selected to be an image based content, every subsequent copy would be automatically selected as image content.

According to the disclosed embodiment, objects within a graphic object can be color enhanced while maintaining the resolution of other objects by dimming objects that do not require color enhancement, and then displaying on the display monitor the graphic object including the dimmed pixels at an increased brightness inverse to the reduced intensity in the dimmed objects. Hence, color enhanced objects can be simultaneously displayed with high resolution text, lines, etc., without the necessity of substantial hardware modification. Moreover, the disclosed embodiment is compatible with existing open system architectures using third party display drivers for controlling hardware-specific display monitors.

The display driver filter 34 can be considered a software agent executable in a data processing system (e.g., the computer system 30) having a monitor. The software agent includes an input for receiving information about pictorial and non-pictorial data areas for presentation on a screen of the monitor, and an "effector" (i.e., the color conversion module 40) selectively changing a brightness of a pictorial data area relative to the brightness of a non-pictorial data area. The agent can be part of an operating system stored in an appropriate storage medium, or can be downloaded onto an appropriate storage medium via an external source, e.g., the Internet. The agent will also serve as a useful assert to suitable home theater equipment, e.g., the Philips DVX8000.

Although the disclosed embodiment describes dimming an object using a 3x256 look-up table to convert a given 24-bits per pixel color to a newer, dimmed color, this example of color conversion is a non-restrictive example. Hence, alternate color conversion schemes may be used. For example, the disclosed display driver filter 34 may also convert colors by converting the color to LHS representation, and then decrease the luminance (L) component.

While this invention has been described in connection with what is presently considered to be the most practical and preferred embodiments, it is to be understood that the invention is not limited to the disclosed embodiments, but, on the contrary, is intended to cover various modifications and equivalent arrangements included within the scope of the appended claims.

## Claims

1. A method for dynamically controlling brightness of objects on a display monitor (43), comprising:
- a first generating step for generating in an operating system graphics module (18) a first call to a display driver filter (34) across a display driver interface (36) to perform a graphic operation for a graphic object having at least one of pictorial content and non-pictorial content;
- a dimming step for dimming pixels of the non-pictorial content in the display driver filter from a specified intensity to a reduced intensity;
- a second generating step for generating in the display driver filter a second call to a display driver (22), which is configured for controlling the display monitor, to perform the graphic operation for the graphic object including the dimmed pixels; and
- a displaying step for displaying on the display monitor the graphic object including the dimmed pixels at an increased brightness inverse to the reduced intensity in the dimmed pixels.

2. The method of claim 1, further comprising configuring the operating system graphics module to generate the first call to the display driver filter for execution of the graphic operation, by declaring (50) that the display driver filter has improved rendering capabilities relative to the operating system graphics module.

3. The method of claim 1, wherein the dimming step comprises:
- identifying each pixel of the graphic object as corresponding to one of the pictorial content and the non-pictorial content;
- identifying, for each pixel identified as corresponding to the non-pictorial content, color values specifying the corresponding specified intensity;
- determining modified color values from a color conversion module (40) for said each pixel identified as corresponding to the non-pictorial content based on the corresponding identified color values, the modified color values specifying the corresponding reduced intensity.

4. The method of claim 1, wherein the dimming step comprises:
- generating a copy of the graphic object;
- identifying each pixel of the copy of the graphic object as corresponding to one of a maintained pixel and a dimmed pixel, including identifying the pixels corresponding to the non-pictorial content as dimmed pixels;
- identifying, for each identified dimmed pixel, color values specifying the corresponding specified intensity;
- determining modified color values from a color conversion module (40) for said each identified dimmed pixel based on the corresponding identified color values, the modified color values specifying the corresponding reduced intensity and
- storing the modified color values in the corresponding said each identified dimmed pixel of the copy of the graphic object.

5. A computer system for displaying a graphic object, comprising:
- a software-based operating system having a graphics module (18) for creating a graphic object for a software application (16) executable by the computer system, the graphics module configured for generating a first call requesting performance of a graphic operation for the graphic object having at least one of pictorial and non-pictorial content;
- a display driver filter for dimming pixels of the non-pictorial content from a specified intensity to a reduced intensity, and for generating a second call requesting performance of the graphic operation for a copy of the graphic object, including the dimmed pixels, respectively; and
- a display monitor (43) configured for displaying the copy of the graphic object at an increased brightness inverse to the reduced intensity of the dimmed pixels.

6. The computer system of claim 5, wherein the display driver filter includes a color conversion module (40) for converting the color intensity values of the selected pixels of the graphic object to the reduced color intensity values, respectively.

7. The computer system of claim 6, further comprising a display monitor color-boost profile (46) specifying a color calibration of the display monitor, the display driver filter generating the reduced color intensity values for the color conversion module based on the display monitor color profile.

8. The computer system of claim 7, further comprising user brightness adjustment settings (42), the display driver filter generating the reduced color intensity values for the color conversion module based on the display monitor color profile and the user brightness adjustment settings.

9. The computer system of claim 5, wherein the display driver filter selects the pixels corresponding to non-pictorial content in the graphic object for reducing the respective color intensity values.

## Patentansprüche

1. Verfahren zur dynamischen Steuerung der Helligkeit von Objekten auf einem Bildschirm (43), welches umfasst:
- einen ersten Erzeugungs-Schritt zum Erzeugen eines ersten Aufrufes, der über eine Bildschirmtreiberschnittstelle (36) einem Bildschirmtreiberfilter (34) zugeführt wird, in einem Graphikmodul (18) eines Betriebssystems, um eine graphische Operation für ein graphisches Objekt mit einem bildlichen Inhalt und/oder einem nichtbildlichen Inhalt auszuführen;
- einen Abdunkelungs-Schritt zum Abdunkeln der Pixel des nichtbildlichen Inhaltes in dem Bildschirmtreiberfilter von einer spezifizierten Intensität zu einer verminderten Intensität;
- einen zweiten Erzeugungs-Schritt zum Erzeugen eines zweiten Aufrufes in dem Bildschirmtreiberfilter, der einem Bildschirmtreiber (22) zugeführt wird, welcher für die Steuerung des Bildschirms konfiguriert ist, um die graphische Operation für das graphische Objekt auszuführen, das die abgedunkelten Pixel enthält; und
- einen Anzeige-Schritt zum Anzeigen des graphischen Objektes, das die abgedunkelten Pixel enthält, auf dem Bildschirm mit einer erhöhten Helligkeit, die zu der verminderten Intensität in den abgedunkelten Pixeln invers ist.

2. Verfahren nach Anspruch 1, welches ferner das Konfigurieren das Graphikmoduls des Betriebssystems zum Erzeugen des dem Bildschirmtreiberfilter zugeführten ersten Aufrufes für die Ausführung der graphischen Operation umfasst, indem deklariert wird (50), dass das Bildschirmtreiberfilter verbesserte Rendering-Fähigkeiten im Vergleich zu dem Graphikmodul des Betriebssystems aufweist.

3. Verfahren nach Anspruch 1, wobei der Abdunkelungs-Schritt umfasst:
- Identifizieren jedes Pixels des graphischen Objektes als entweder dem bildlichen Inhalt oder dem nichtbildlichen Inhalt entsprechend;
- für jedes Pixel, das als dem nichtbildlichen Inhalt entsprechend identifiziert wurde, Ermitteln von Farbwerten, welche die entsprechende festgelegte Intensität angeben;
- Bestimmen geänderter Farbwerte von einem Farbkonvertierungsmodul (40) für jedes Pixel, das als dem nichtbildlichen Inhalt entsprechend identifiziert wurde, auf der Basis der entsprechenden ermittelten Farbwerte, wobei die geänderten Farbwerte die entsprechende verminderte Intensität angeben.

4. Verfahren nach Anspruch 1, wobei der Abdunkelungs-Schritt umfasst:
- Erzeugen einer Kopie des graphischen Objektes;
- Identifizieren jedes Pixels der Kopie des graphischen Objektes als entweder einem erhalten gebliebenen Pixel oder einem abgedunkelten Pixel entsprechend, einschließlich des Identifizierens der dem nichtbildlichen Inhalt entsprechenden Pixel als abgedunkelte Pixel;
- für jedes identifizierte abgedunkelte Pixel, Ermitteln von Farbwerten, welche die entsprechende festgelegte Intensität angeben;
- Bestimmen geänderter Farbwerte von einem Farbkonvertierungsmodul (40) für jedes identifizierte abgedunkelte Pixel auf der Basis der entsprechenden ermittelten Farbwerte, wobei die geänderten Farbwerte die entsprechende verminderte Intensität angeben, und
- Speichern der geänderten Farbwerte in dem entsprechenden jeweiligen identifizierten abgedunkelten Pixel der Kopie des graphischen Objektes.

5. Computersystem zum Anzeigen eines graphischen Objektes, welches umfasst:
- ein softwarebasiertes Betriebssystem, das ein Graphikmodul (18) zum Erzeugen eines graphischen Objektes für eine durch das Computersystem ausführbare Softwareanwendung (16) aufweist, wobei das Graphikmodul für das Erzeugen eines ersten Aufrufes konfiguriert ist, welcher die Ausführung einer graphischen Operation für das graphische Objekt mit einem bildlichen und/oder einem nichtbildlichen Inhalt anfordert;
- einen Bildschirmtreiberfilter zum Abdunkeln von Pixeln des nichtbildlichen Inhaltes von einer spezifizierten Intensität zu einer verminderten Intensität und zum Erzeugen eines zweiten Aufrufes, der die Ausführung der graphischen Operation für eine Kopie des graphischen Objektes, welche jeweils die abgedunkelten Pixel enthält, anfordert; und
- einen Bildschirm (43), der für das Anzeigen der Kopie des graphischen Objektes mit einer erhöhten Helligkeit, die zu der verminderten Intensität der abgedunkelten Pixel invers ist, konfiguriert ist.

6. Computersystem nach Anspruch 5, wobei das Bildschirmtreiberfilter ein Farbkonvertierungsmodul (40) zum Konvertieren der Farbintensitätswerte der ausgewählten Pixel des graphischen Objektes zu den jeweiligen verringerten Farbintensitätswerten enthält.

7. Computersystem nach Anspruch 6, welches ferner ein Bildschirm-Farbverstärkungsprofil (46) umfasst, welches ein Farbkalibrierung des Bildschirms festlegt, wobei das Bildschirmtreiberfilter die verringerten Farbintensitätswerte für das Farbkonvertierungsmodul auf der Basis des Bildschirm-Farbprofils erzeugt.

8. Computersystem nach Anspruch 7, welches ferner Benutzer-Helligkeitseinstellungen (42) umfasst, wobei das Bildschirmtreiberfilter die verringerten Farbintensitätswerte für das Farbkonvertierungsmodul auf der Basis des Bildschirm-Farbprofils und der Benutzer-Helligkeitseinstellungen erzeugt.

9. Computersystem nach Anspruch 5, wobei das Bildschirmtreiberfilter die Pixel, welche dem nichtbildlichen Inhalt des graphischen Objektes entsprechend, für das Verringern der jeweiligen Farbintensitätswerte auswählt.

## Revendications

1. Procédé destiné à commander de manière dynamique la luminosité d'objets sur un moniteur d'affichage (43), comprenant :
- une première étape de génération destinée à générer, dans un module graphique de système d'exploitation (18), un premier appel vers un filtre de pilote d'affichage (34) par le biais d'une interface de pilote d'affichage (36), afin d'exécuter une opération graphique pour un objet graphique comprenant au moins un élément à contenu graphique et à contenu non graphique;
- une étape de gradation destinée à appliquer une gradation à des pixels à contenu non graphique dans le filtre de pilote d'affichage d'une intensité spécifiée à une intensité réduite;
- une seconde étape de génération destinée à générer, dans le filtre de pilote d'affichage, un second appel vers un pilote d'affichage (22), lequel est configuré pour commander le moniteur d'affichage, afin d'exécuter l'opération graphique pour l'objet graphique incluant les pixels estompés, et
- une étape d'affichage destinée à afficher, sur le moniteur d'affichage, l'objet graphique incluant les pixels estompés avec une luminosité accrue, inverse de l'intensité réduite dans les pixels estompés.

2. Procédé suivant la revendication 1, comprenant en outre la configuration du module graphique de système d'exploitation afin de générer le premier appel vers le filtre de pilote d'affichage pour l'exécution de l'opération graphique, en déclarant (50) que le filtre de pilote d'affichage a des capacités de rendu améliorées par rapport au module graphique de système d'exploitation.

3. Procédé suivant la revendication 1, dans lequel l'étape de gradation comprend :
- l'identification de chaque pixel de l'objet graphique comme correspondant à un pixel à contenu graphique et à contenu non graphique;
- l'identification, pour chaque pixel identifié comme correspondant au contenu non graphique, de valeurs de couleur spécifiant l'intensité spécifiée correspondante, et
- la détermination de valeurs de couleurs modifiées à partir d'un module de conversion de couleurs (40) pour chaque dit pixel identifié comme correspondant au contenu non graphique sur la base des valeurs de couleur correspondantes identifiées, les valeurs de couleurs modifiées spécifiant l'intensité réduite correspondante.

4. Procédé suivant la revendication 1, dans lequel l'étape de gradation comprend :
- la génération d'une copie de l'objet graphique;
- l'identification de chaque pixel de la copie de l'objet graphique comme correspondant à l'un d'un pixel conservé et d'un pixel estompé, incluant l'identification des pixels correspondant au contenu non graphique comme des pixels estompés;
- l'identification, pour chaque pixel estompé identifié, de valeurs de couleur spécifiant l'intensité spécifiée correspondante;
- la détermination de valeurs de couleurs modifiées à partir d'un module de conversion de couleurs (40) pour chaque dit pixel estompé identifié sur la base des valeurs de couleur correspondantes identifiées, les valeurs de couleur modifiées spécifiant l'intensité réduite correspondante, et
- le stockage des valeurs de couleur modifiées dans ledit pixel estompé identifié correspondant de la copie de l'objet graphique.

5. Système informatique destiné à afficher un objet graphique, comprenant :
- un système d'exploitation reposant sur un logiciel comprenant un module graphique (18) destiné à créer un objet graphique pour une application logicielle (16) exécutable par le système informatique, le module graphique étant configuré pour générer un premier appel demandant l'exécution d'une opération graphique pour l'objet graphique contenant au moins un élément ayant un contenu graphique et un contenu non graphique;
- un filtre de pilote d'affichage respectivement destiné à appliquer une gradation à des pixels du contenu non graphique d'une intensité spécifiée à une intensité réduite, et destiné à générer un second appel demandant l'exécution de l'opération graphique pour une copie de l'objet graphique incluant les pixels estompés, et
- un moniteur d'affichage (43) configuré pour afficher la copie de l'objet graphique avec une luminosité accrue, inverse de l'intensité réduite des pixels estompés.

6. Système informatique suivant la revendication 5, dans lequel le filtre de pilote d'affichage comprend un module de conversion de couleurs (40) destiné à convertir les valeurs d'intensité de couleur des pixels sélectionnés de l'objet graphique respectivement en des valeurs d'intensité de couleur réduite.

7. Système informatique suivant la revendication 6, comprenant en outre un profil (46) de stimulation des couleurs de moniteur d'affichage spécifiant une calibration de couleur du moniteur d'affichage, le filtre de pilote d'affichage générant les valeurs d'intensité de couleur réduite pour le module de conversion de couleurs sur la base du profil de couleur de moniteur d'affichage.

8. Système informatique suivant la revendication 7, comprenant en outre des réglages de luminosité d'utilisateur (42), le filtre de pilote d'affichage générant les valeurs d'intensité de couleur réduite pour le module de conversion de couleurs sur la base du profil de couleur de moniteur d'affichage et des réglages de luminosité d'utilisateur.

9. Système informatique suivant la revendication 5, dans lequel le filtre de pilote d'affichage sélectionne les pixels correspondant au contenu non graphique dans l'objet graphique pour réduire les valeurs d'intensité de couleur respectives.
